# EUROPÄISCHE PATENTSCHRIFT

(11) **EP 3 181 387 B1**
(45) Veröffentlichungstag und Bekanntmachung des Hinweises auf die Patenterteilung: **19.02.2020**
(21) Anmeldenummer: 16200888.2
(22) Anmeldetag: 28.11.2016
(51) Int. Cl.: B60J 7/12

(54) **FALTVERDECK FÜR EIN CABRIOLET-FAHRZEUG**
FOLDING COVERING FOR A CONVERTIBLE VEHICLE
CAPOTE PLIANTE POUR UN VÉHICULE DÉCAPOTABLE

(30) Priorität: 11.12.2015 DE 102015224989
(43) Veröffentlichungstag der Anmeldung: 21.06.2017
(73) Patentinhaber: Magna Car Top Systems GmbH, 74321 Bietigheim-Bissingen (DE)
(72) Erfinder: BRUDER, Gernot, 76131 Karlsruhe (DE); KOBER, Tobias, 71254 Ditzingen (DE); KOSTADINOV, Metodi, 74321 Bietigheim-Bissingen (DE); SOERGEL, Christian, 70197 Stuttgart (DE); SUESS, Reinhard, 74831 Gundelsheim (DE)
(74) Vertreter: Völger, Silke Beatrix

(56) Entgegenhaltungen:
- DE-A1-102007 041 296
- DE-A1-102013 108 730
- DE-A1-102014 106 266
- DE-U1-202011 101 132

## Beschreibung

Die vorliegende Erfindung betrifft ein Faltverdeck für ein Cabriolet-Fahrzeug gemäß Patentanspruch 1.

Faltverdecke für Cabriolet-Fahrzeuge sind in unterschiedlichen Ausführungsvarianten bekannt und verschließen in der Regel eine entlang des Fahrzeugdaches bis in den Heckbereich ragende Dachöffnung. Hierbei ist das Faltverdeck mittels eines Verdeckgestänges derart zwischen einer Offenstellung und einer Schließstellung bewegbar ausgeführt, dass das Faltverdeck in der Offenstellung in einem heckseitigen Stauraum abgelegt ist. Das Faltverdeck umfasst ein Verdeckgestänge mit einer Vielzahl von Lenkern, Spriegeln und Bügeln. Ein Verdeckbezug wird von dem Verdeckgestänge getragen, der in der geschlossenen Position den Fahrzeuginnenraum überspannt. Das Verdeckgestänge umfasst auch einen Spannbügel, an dem der Verdeckbezug am unteren Endbereich heckseitig fixiert ist und der den Verdeckbezug in der Schließstellung unter Spannung setzt. Der Spannbügel ist an einer Spannbügelkinematik gehalten und über diese zwischen seiner Funktions-Spannposition, die der Schließposition des Faltverdecks entspricht, und einer Ablageposition verstellbar. In der Ablageposition des Spannbügels befindet sich das Faltverdeck in der Offenstellung.

Zu Beginn der Ablagebewegung kann der Spannbügel von seiner Spannposition in eine Lösestellung bewegt werden. In dieser Lösestellung ist der Spannbügel so weit angehoben, dass die Spannung des Verdeckbezugs aufgehoben ist und eine auf dem heckseitigen Ablageraum aufliegende Heckklappe angehoben werden kann. Zur Sicherung des Spannbügels in der Spannposition dient ein Sturmgestänge, über das der Spannbügel bei geschlossenem Faltverdeck an einem Bauteil des Verdeckgestänges abgestützt ist.

Die Verstellung des Spannbügels zwischen Spannposition und Ablageposition über die Spannbügelkinematik erfolgt als gekoppelte Bewegung der Bewegung des Faltdaches. Hierzu ist die Spannbügelkinematik mit der Dachkinematik gekoppelt. Bei einer Bewegung der Dachkinematik führt der Spannbügel ebenfalls eine Verstellbewegung aus. Über die Spannbügelkinematik ist der Spannbügel einerseits an die Fahrzeugkarosserie und andererseits an die Dachkinematik angebunden.

Aus der DE 10 2014 106 266 A1 ist ein Faltverdeck mit einem Verdeckgestänge und einem Verdeckbezug für ein Cabriolet-Fahrzeug bekannt, welches über eine Dachkinematik zwischen einer Schließposition und einer Öffnungsposition verstellbar ist. Weiterhin ist ein dem Verdeckgestänge zugeordneter, über eine Spannbügelkinematik verstellbar gelagerter Spannbügel vorgesehen, an dem der Verdeckbezug befestigt ist, wobei die Dachkinematik mit der Spannbügelkinematik derart gekoppelt ist, dass der Spannbügel bei einer Bewegung der Dachkinematik eine Verstellbewegung ausführt. Die gekoppelte Verdeckkinematik ist über ein gemeinsames Antriebsorgan verstellbar. Das Verdeckgestänge weist ein Sturmgestänge auf, welches eine obere und eine untere gelenkig miteinander verbundene Sturmstange umfasst. Das Sturmgestänge ist über eine Steuereinrichtung die einen oberen Kniehebel und einen lagerfesten Kniehebel aufweist zwischen einer Verriegelungsposition, in der der Spannbügel von dem Sturmgestänge beaufschlagt wird und einer Entriegelungsposition verstellbar ausgeführt. Der obere Kniehebel ist mit der oberen Sturmstange verbunden. Die Verstellbewegung erfolgt über das gemeinsame Antriebsorgan, welches eine Antriebsscheibe umfasst, die über eine Koppel den lagerfesten Kniehebel antreibt. Die Antriebsscheibe dreht sich im weiteren Bewegungsablauf der Verstellbewegung des Faltverdecks weiter.Aus der EP 0 749 859 A1 ist ein Faltverdeck für ein Cabriolet-Fahrzeug bekannt, das ein Verdeckgestänge mit einem Hauptantrieb aufweist. Des Weiteren ist eine Spannbügelkinematik vorgesehen, die eine obere, eine untere Sturmstange und einen Spannbügel umfasst. Der Spannbügelkinematik ist ein separates Antriebsorgan zugeordnet, wobei das Antriebsorgan karosserieseitig gelagert und als Hydraulikzylinder ausgeführt ist. Eine Antriebsbewegung des Hydraulikzylinders wird hierbei über einen am Hauptlager des Verdeckgestänges schwenkbeweglich gelagerten Schwinghebel erreicht, der über einen Kniehebel mit einem Spannhebel derart verbunden ist, dass mit diesem die obere Sturmstange entsprechend der Bewegung des Antriebskolbens zur Dachhaut hin bzw. von dieser weg bewegt werden kann. Die untere Sturmstange ist dabei derart am Spannbügel gelagert und die vordere Sturmstange am Verdeckgestänge, dass die Spannbügelkinematik unabhängig vom Hauptantrieb bewegbar ist. Nachteilig bei dieser bekannten Ausführungsform der Dachkinematik ist allerdings, dass der der Spannbügelkinematik zugeordnete Hydraulikzylinder während der Verstellbewegung des Fahrzeugdaches drucklos geschaltet werden muss. Des Weiteren ist der Bewegungsablauf beim Öffnen und Schließen des Fahrzeugdaches kinematisch unbestimmt.

Aufgabe der vorliegenden Erfindung ist es das eingangs genannte Cabriolet-Fahrzeug mit einem Faltverdeck derart weiterzubilden, dass das Faltverdeck bei der Öffnungs- und Schließbewegung einem kinematisch bestimmten Bewegungsablauf folgt, die Dachkinematik robust ist, und das Faltverdeck mit zugeordneter Hydraulikversorgung für die Antriebsorgane kostengünstig realisierbar ist.

Diese Aufgabe wird durch die im Anspruch 1 angegebenen Merkmale gelöst.

Durch die im Patentanspruch 1 angegebene Merkmalskombination ist es mit einfachen Mitteln möglich, ein Faltverdeck zu realisieren, bei dem ein kinematisch bestimmter Bewegungsablauf möglich ist.

Ein weiterer Vorteil besteht darin, dass der Spannbügelzylinder nachdem der Spannbügel aufgestellt ist, auch während der restlichen Verstellbewegung des Faltverdecks in die Ablageposition unter Druck bleiben kann. Hierdurch kann auf eine zusätzliche hydraulische Ansteuerung und ein entsprechendes Ventil verzichtet werden.

Die erfindungsgemäße Ausführung sieht vor, dass der untere Kniehebel an einem ersten Endbereich an dem Verdecklager angeschlagen ist. Der zweite Endbereich ist über einen Drehpunkt mit dem ersten Endbereich des oberen Kniehebels gekoppelt. Zweiter Endbereich des oberen Kniehebels ist an der unteren Sturmstange über einen weiteren Drehpunkt angebunden. Untere Sturmstange ist über einen Drehpunkt mit der oberen Sturmstange verbunden, wobei die obere und untere Sturmstange über den Spannbügel die Stoffspannung aufbringen. Die Sturmstangen werden über den Zweischlag - bestehend aus Kniehebel unten und Kniehebel oben - angetrieben. Durch die oben beschriebene Ausführung, bei der der Spannbügelzylinder unter Druck verbleibt, verbleibt hierdurch der durch den Spannbügelzylinder angetriebene untere Kniehebel unverändert an seiner Position. Hierdurch wirkt der zwischen unterem und oberem Kniehebel ausgeführte Drehpunkt für die restliche Verstellbewegung des Faltvedecks wie ein lagerfester Drehpunkt. Die Verstellbewegung ist somit zu jedem Zeitpunkt kinematisch bestimmt.

Des Weiteren kann die aufgestellte Spannbügelposition mit weniger Kraft erreicht und somit stabilisiert werden. Dies ist durch die günstige Anbindung des oberen Kniehebels mit der unteren Sturmstange erzielbar.

Weitere vorteilhafte Ausgestaltungen und Weiterbildungen des erfindungsgemäßen Faltverdecks eines Cabriolet-Fahrzeugs ergeben sich aus den Unteransprüchen.

Bevorzugte Ausführungsformen des Faltverdecks eines Cabriolet-Fahrzeugs werden nachfolgend beispielshalber beschrieben, wobei veranschaulichend auf die beigefügten Zeichnungen Bezug genommen wird.

Es zeigen:
- Fig. 1: eine Seitenansicht eines Verdeckgestänges bei geschlossenem Faltverdeck (Schließposition); und
- Fig. 2: das Verdeckgestänge gemäß Figur 1 in einer vereinfachten kinematischen Darstellung

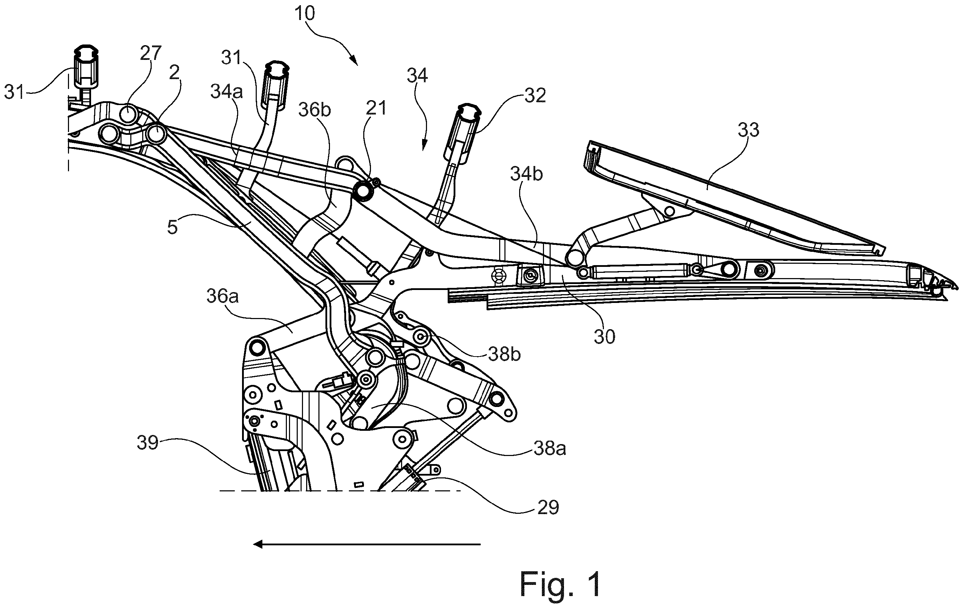

In der Figur 1 ist eine Seitenansicht des Verdeckgestänges 10 bei geschlossenem Faltverdeck abgebildet. Das Faltverdeck ist, wie es eingangs bereits beschrieben ist, zwischen einer den Fahrzeuginnenraum überdeckenden Schließposition und einer geöffneten Ablageposition zu verstellen, in der das Faltverdeck in einem heckseitigen Ablageraum ablegbar ist. Das Faltverdeck umfasst einen Verdeckbezug und das zeichnerisch dargestellte Verdeckgestänge 10, auf dem der Verdeckbezug aufgespannt ist. Das Faltverdeck ist mittels des Verdeckgestänges 10 bzw. der Dachkinematik zwischen den oben genannten Positionen verstellbar ausgeführt, wobei die Dachkinematik als Viergelenkkinematik V ausgeführt ist und zwei Dachlenker 5, 6 umfasst. Einer der beiden Dachlenker wird nachfolgend als Hauptlenker 5 bezeichnet, der zweite Dachlenker 6 ist üblicherweise als C Säule ausgeführt.

Das Faltverdeck umfasst ein vorderes Dachteil, welches in der Schließposition unmittelbar am Windschutzscheibenrahmen anliegt und über eine Verriegelungsmechanik mit einem Windschutzscheibenrahmen zu verriegeln ist. An dem vorderen Dachteil ist der Verdeckbezug befestigt, der im hinteren Bereich des Faltverdecks von einem Spannbügel 30, welcher ebenfalls Teil des Verdeckgestänges 10 ist, in der Schließposiiton unter Spannung gesetzt wird. Das Dachteil ist entweder unmittelbar oder über einen Dachteillenker 28 mit den Dachlenkern 5, 6 gekoppelt.

Die beiden Dachlenker 5, 6 sind über erste endseitige Lagerstellen / Drehpunkte 1, 4 gelenkig an einer Lagerkonsole angebunden. Die Lagerkonsole ist üblicherweise eine Lagerplatte, welche an der Fahrzeugkarosserie befestigt ist. Des Weiteren weisen die Dachlenker 5, 6 zweite endseitige Lagerstellen / Drehpunkte 2, 3 auf. Diese Lagerstellen sind auf dem die Dachlenker verbindenden Dachrahmen Mitte 28 ausgeführt.

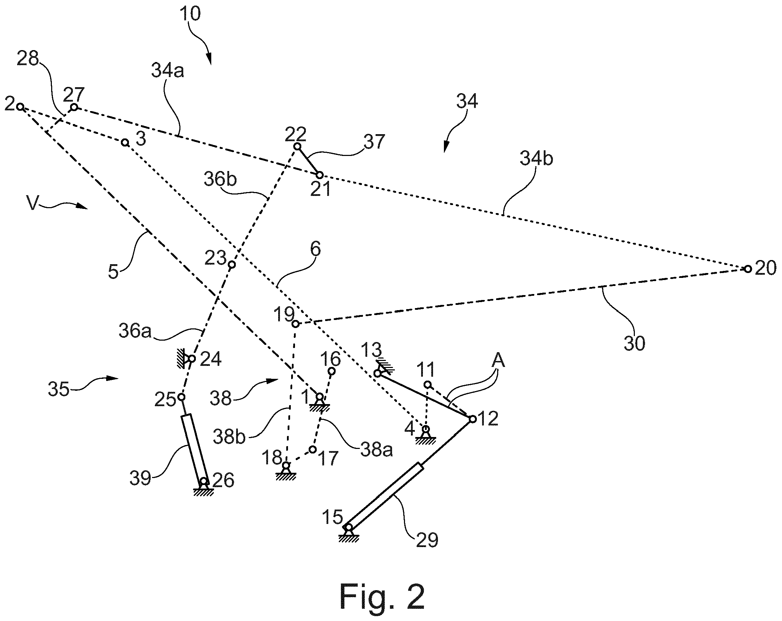

Wie es aus den Zeichnungen zu erkennen ist, ist der zweite Dachlenker 6 über ein Antriebsorgan 29 antreibbar ausgestaltet. Als Antriebsorgan ist hier ein Hydraulikzylinder vorgesehen. Wie es aus der Darstellung der Figur 2 zu ersehen ist, ist zwischen Dachlenker 6 und Kolbenstange des Hydraulikzylinders 29 ein Antriebsvorgelege A zwischengeschaltet. Dieses Antriebsvorgelege A wandelt die lineare Bewegung der Kolbenstange in eine Drehbewegung um den Lagerpunkt 4, an dem der Dachlenker 6 angebunden ist, um.

Weitere Bestandteil des Verdeckgestänges 10 sind eine Vielzahl das Faltverdeck in Querrichtung überspannende Querspriegel 31 angeordnet. Hierbei ist der hinten liegende Spriegel als Eckspriegel 32 ausgebildet. Die Fahrzeuglängsrichtung ist in der Figur 1 mit dem Pfeil L angezeigt.

Im heckseitigen Bereich des Faltverdecks zwischen Eckspriegel 32 und Spannbügel 30, befindet sich eine in den Verdeckbezug integrierte Heckscheibe, die von einem Heckscheibenrahmen 33 gehalten ist. Der Heckscheibenrahmen 33 wird von einem Heckscheibenrahmenlenker 34 gelenkig an das Verdeckgestänge 10 angebunden.

Zur Abstützung des Spannbügels 30 in der Schließposition des Faltverdecks dient ein Sturmgestänge 34, dass zwei gelenkig aneinander gekoppelte Sturmstangen 34a und 34b umfasst. Die gelenkige Verbindung der Sturmstangen 34a und 34b wird durch die Lagerstelle 21 gebildet. Die vordere Sturmstange 34a ist über die Lagerstelle 27 gelenkig am oberen Endbereich des Hauplenkers 5 angebunden. Die untere Sturmstange 34b ist mit ihrem der Lagerstelle 21 gegenüberliegenden Endbereich über eine Lagerstelle 20 gelenkig an dem Spannbügel 30 angebunden. In der in der Figur 1 dargestellten Schließposition des Faltverdecks nimmt das Sturmgestänge 34 eine Verriegelungsposition ein, in welcher der Spannbügel 30 in der Spannposition gehalten und arretiert ist. In dieser Stellung liegt der Spannbügel 30 auf einem Ablageraumdeckel auf, der den Ablageraum zur Aufnahme des Faltverdecks in Ablageposition abdeckt.

Das Sturmgestänge 34 wird durch eine Steuerungseinrichtung 35 zwischen einer Entriegelungs- und einer Verriegelungsposition verstellt bzw. ist über die Steuerungseinrichtung 35 antreibbar. Die Steuerungseinrichtung 35 umfasst hierfür einen Zweischlag 36, der aus einem oberen und unteren Kniehebel 36a, 36b besteht und einem Antriebsorgan 39. Das Antriebsorgan 39 ist als Hydraulikzylinder ausgeführt und über eine karosseriefeste Lagerstelle 26 gelenkig angebunden. Unterer und oberer Kniehebel 36a, 36b sind über eine Lagerstelle 23 gelenkig miteinander verbunden. Der untere Kniehebel 36a ist des Weiteren an seinem unteren Endbereich an der Lagerkonsole gelagert und an seinem der Lagerstelle 23 gegenüberliegendem Endbereich mit der Kolbenstange des Hydraulikzylinders gelenkig gekoppelt. Der obere Kniehebel 36b ist mittels seinem der Lagerstelle 23 gegenüberliegendem Endbereich an einem Fortsatz 37 der unteren Sturmstange 34b über eine Lagerstelle 22 gelenkig angebunden. Der Fortsatz 37 ist dabei als Verlängerung der unteren Sturmstange 34b im Bereich der Lagerstelle 21 ausgeführt. In der Entriegelungsstellung des Sturmgestänges 34 kann der Spannbügel 30 aus der entriegelten Position in die angehobene Freigabeposition aufschwenken. In dieser Position lässt sich der Deckel des Ablageraums öffnen.

Aus den Zeichnungen kann man weiterhin ersehen, dass der Spannbügel 30 über eine Spannbügelkinematik 38 geführt ist und zwischen einer Position, bei der der Spannbügel 30 auf dem Ablageraumdeckel aufliegt (Schließposition) und der abgesenkten Position in den Ablageraum (Öffnungsposition) hinein verstellt werden kann. Über die Spannbügelkinematik 38 kann der Spannbügel 30 des Weiteren eine Verstellbewegung zwischen der arretierten gespannten Position, in welcher der Spannbügel 30 von dem Sturmgestänge 34 arretiert ist, und einer entriegelten Position ausführen. In der entriegelten Position kann der Spannbügel 30 bei gelöster Stoffspannung in eine nach oben aufgeschwenkte Position verlagert werden. Die Spannbügelkinematik 38 besteht aus zwei Lenkerbauteilen, die als Koppellenker 38a und als Führungslenker 38b ausgeführt sind. Der Koppellenker 38a ist über die Lagerstelle 16 gelenkig mit dem Hauptlenker 5 der Dachkinematik verbunden. Der Führungslenker 38b ist an seinem ersten Endbereich über die Lagerstelle 17 mit dem Koppellenker 38a verbunden und an seinem zweiten Endbereich über eine Lagerstelle 19 gelenkig mit dem ersten Endbereich des Spannbügels 20 gekoppelt. Der Führungslenker 38b ist über eine weitere Lagerstelle 18 schwenkbar an dem Verdecklager gelagert. Der zweite Endbereich des Spannbügels 30 ist über eine Lagerstelle 20 gelenkig an der unteren Sturmstange 34b angebunden.

## Patentansprüche

1. Faltverdeck für ein Cabriolet-Fahrzeug welches ein Verdeckgestänge (10) und einen Verdeckbezug umfasst, welches über eine Dachkinematik zwischen einer Schließposition und einer Öffnungsposition verstellbar ist, wobei die Dachkinematik als Viergelenkkinematik (V) ausgeführt ist und einen ersten und einen zweiten Lenker (5, 6) aufweist, wobei der erste Lenker (6) der Viergelenkkinematik über ein erstes Antriebsorgan (29) verstellbar ausgeführt ist, und wobei weiterhin ein dem Verdeckgestänge (10) zugeordneter, über eine Spannbügelkinematik (38) verstellbar gelagerter Spannbügel (30) vorgesehen ist, an dem der Verdeckbezug befestigt ist, wobei die Dachkinematik mit der Spannbügelkinematik (38) derart gekoppelt ist, dass der Spannbügel (30) bei einer Bewegung der Dachkinematik eine Verstellbewegung ausführt, wobei die Spannbügelkinematik (38) einen Führungslenker (38b) und einen Koppellenker (38a) umfasst, wobei der Koppellenker (38a) gelenkig mit dem zweiten Lenker (5) der Viergelenkkinematik verbunden ist und der Führungslenker (38b) an seinem ersten Endbereich über eine Lagerstelle (17) gelenkig mit dem Koppellenker (38a) und über den zweiten Endbereich über eine Lagerstelle (19) gelenkig mit dem Spannbügel (30) verbunden ist, und wobei das Verdeckgestänge (10) weiterhin ein Sturmgestänge (34) aufweist, welches zwischen einer Verriegelungsposition, in der der Spannbügel (30) von dem Sturmgestänge (34) beaufschlagt wird und einer Entriegelungsposition über eine Steuereinrichtung (35) verstellbar ausgeführt ist, wobei das Sturmgestänge (34) eine obere und eine untere über eine Lagerstelle (21) gelenkig miteinander verbundene Sturmstange (34a, 34b) aufweist und wobei die Steuereinrichtung (35) einen Zweischlag (36) und ein zweites Antriebsorgan (39) umfasst, wobei der Zweischlag einen oberen und einen unteren über eine Lagerstelle (23) gelenkig miteinander verbundenen Kniehebel (36a, 36b) aufweist, wobei der obere Kniehebel (36b) an einem als Verlängerung der unteren Sturmstange (34b) im Bereich der Lagerstelle (21) ausgeführten Fortsatz (37) über eine Lagerstelle (22) gelenkig angebunden ist und der untere Kniehebel (36a) mit dem Antriebsorgan (39) gelenkig verbunden ist und wobei der untere Kniehebel (36a) zusätzlich über eine karosseriefeste Lagerstelle (24) gelenkig angebunden ist.

## Claims

1. Folding covering for a convertible vehicle, which folding covering comprises a top linkage (10) and a top cover, which top linkage (10) can be adjusted between a closed position and an open position via a roof kinematic system, the roof kinematic system being configured as a four-bar linkage kinematic system (V) and having a first and a second link (5, 6), the first link (6) of the four-bar linkage kinematic system being configured such that it can be adjusted via a drive member (29), and, furthermore, a tensioning hoop (30) which is assigned to the top linkage (10) and is mounted such that it can be adjusted via a tensioning hoop kinematic system (38) being provided, to which tensioning hoop (30) the top cover is fastened, the roof kinematic system being coupled to the tensioning hoop kinematic system (38) in such a way that, during a movement of the roof kinematic system, the tensioning hoop (30) performs an adjusting movement, the tensioning hoop kinematic system (38) comprising a guide link (38b) and a coupling link (38a), the coupling link (38a) being connected in an articulated manner to the second link (5) of the four-bar linkage kinematic system, and the guide link (38b) being connected at its first end region via a bearing point (17) in an articulated manner to the coupling link (38a) and via the second end region via a bearing point (19) in an articulated manner to the tensioning hoop (30), and, furthermore, the top linkage (10) having a storm linkage (34) which is configured such that it can be adjusted via a control device (35) between a locked position, in which the tensioning hoop (30) is loaded by the storm linkage (34), and an unlocked position, the storm linkage (34) having an upper and a lower storm rod (34a, 34b) which are connected to one another in an articulated manner via a bearing point (21), and the control device (35) comprising a four-rod linkage (36) and a second drive member (39), the four-rod linkage having an upper and a lower toggle lever (36a, 36b) which are connected to one another in an articulated manner via a bearing point (23), the upper toggle lever (36b) being attached in an articulated manner via a bearing point (22) on a projection (37) which is configured as an extension of the lower storm rod (34b) in the region of the bearing point (21), and the lower toggle lever (36a) being connected in an articulated manner to the drive member (39), and the lower toggle lever (36a) additionally being attached in an articulated manner via a bearing point (24) which is fixed to the vehicle body.

## Revendications

1. Capote repliable destinée à un véhicule cabriolet et comprenant une tringlerie de capote (10) et un revêtement de capote qui peut être réglé entre une position fermée et une position ouverte par le biais d'une cinématique de toit, la cinématique de toit étant conçue comme une cinématique à quatre articulations (V) et comportant un premier et un deuxième bras de liaison (5, 6), le premier bras de liaison (6) de la cinématique à quatre articulations étant conçu pour être réglable par le biais d'un premier élément d'entraînement (29), et un étrier tendeur (30) étant en outre prévu qui est associé à la tringlerie de capote (10), qui est monté de manière réglable par le biais d'une cinématique d'étrier tendeur (38) et auquel le revêtement de capote est fixé, la cinématique de toit étant accouplée à la cinématique d'étrier tendeur (38) de telle sorte que l'étrier tendeur (30) effectue un mouvement de réglage lorsque la cinématique de toit se déplace, la cinématique de l'étrier tendeur (38) comprenant une bras de guidage (38b) et un bras d'accouplement (38a), le bras d'accouplement (38a) étant relié de manière articulée au deuxième bras de liaison (5) de la cinématique à quatre articulations et le bras de guidage (38b) étant relié, à sa première région d'extrémité par le biais d'un point d'appui (17), de manière articulée au bras d'accouplement (38a) et, à la deuxième région d'extrémité par le biais d'un point d'appui (19), de manière articulée à l'étrier tendeur (30), et la tringlerie de capote (10) comprenant en outre une tringlerie tempête (34) qui est réglable entre une position de verrouillage, dans laquelle l'étrier tendeur (30) est sollicité par la tringlerie de tempête (34), et une position de déverrouillage par le biais d'un dispositif de commande (35), la tringlerie de tempête (34) comportant des barres de tempête supérieure et inférieure (34a, 34b) articulées l'une avec l'autre par le biais d'un point d'appui (21) et le dispositif de commande (35) comprenant une double butée (36) et un deuxième élément d'entraînement (39), la double butée comportant des leviers à bascule supérieur et inférieur (36a, 36b) qui sont reliés entre eux de manière articulée par le biais d'un point d'appui (23), le levier à bascule supérieur (36b) étant raccordé de manière articulée à une extension (37) conçue comme un prolongement de la barre de tempête inférieure (34b) dans la région du point d'appui (21) et le levier à bascule inférieur (36a) étant relié de manière articulée à l'élément d'entraînement (39) et le levier à bascule inférieur (36a) étant en outre raccordé de manière articulé par le biais d'un point d'appui (24) fixé à la carrosserie.
